(19) **Europäisches Patentamt / European Patent Office / Office européen des brevets**

(11) **EP 2 399 163 B1**

(12) **FASCICULE DE BREVET EUROPEEN**

(45) Date de publication et mention de la délivrance du brevet:
**18.09.2013 Bulletin 2013/38**

(51) Int Cl.:
***G02F 1/35*** (2006.01)

(21) Numéro de dépôt: **10708246.3**

(86) Numéro de dépôt international:
**PCT/FR2010/000140**

(22) Date de dépôt: **19.02.2010**

(87) Numéro de publication internationale:
**WO 2010/094863 (26.08.2010 Gazette 2010/34)**

(54) **DISPOSITIF OPTIQUE POUR LA GÉNÉRATION D'UNE LUMIÈRE POLYCHROMATIQUE**

OPTISCHE EINRICHTUNG ZUR ERZEUGUNG VON POLYCHROMATISCHEM LICHT

OPTICAL DEVICE FOR GENERATING POLYCHROMATIC LIGHT

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **20.02.2009 FR 0900782**

(43) Date de publication de la demande:
**28.12.2011 Bulletin 2011/52**

(73) Titulaires:
- **Université de Limoges**
  **87032 Limoges (FR)**
- **Leukos**
  **87069 Limoges (FR)**
- **IPHT Institut für Photonische Technologien e.V.**
  **07745 Jena (DE)**

(72) Inventeurs:
- **LEPROUX, Philippe**
  **F-87000 Limoges (FR)**
- **COUDERC, Vincent**
  **F-87430 Verneuil-sur-Vienne (FR)**
- **LABRUYERE, Alexis**
  **F-87100 Limoges (FR)**
- **HUSS, Guillaume**
  **F-87000 Limoges (FR)**
- **KOBELKE, Jens**
  **07751 Munchenroda (DE)**
- **BARTELT, Hartmut**
  **07751 Jena-Kunitz (DE)**
- **SCHUSTER, Kay**
  **07743 Jena (DE)**
- **TOMBELAINE, Vincent**
  **F-87000 Limoges (DE)**

(74) Mandataire: **Plaçais, Jean Yves et al**
**Cabinet Netter**
**36, avenue Hoche**
**75008 Paris (FR)**

(56) Documents cités:
- **LESVIGNE C: "Visible supercontinuum generation controlled by intermodal four-wave mixing in microstructured fiber" OPTICS LETTERS, OSA, OPTICAL SOCIETY OF AMERICA, WASHINGTON, DC, US, 1 août 2007 (2007-08-01), pages 2173-2175, XP009123314 ISSN: 0146-9592**
- **KALOSHA V P ET AL: "Wideband frequency tuning by phase-matched stimulated four-photon mixing in low mode-number GeO2-SiO2 fibers" OPTICS COMMUNICATIONS, NORTH-HOLLAND PUBLISHING CO. AMSTERDAM, NL, vol. 57, no. 5, 1 avril 1986 (1986-04-01), pages 314-316, XP024506750 ISSN: 0030-4018 [extrait le 1986-04-01]**
- **STOLEN R: "Phase-matched-stimulated four photon mixing in silica-fiber waveguides" IEEE JOURNAL OF QUANTUM ELECTRONICS, IEEE SERVICE CENTER, PISCATAWAY, NJ, USA, vol. 11, no. 3, 1 mars 1975 (1975-03-01), pages 100-103, XP009123271 ISSN: 0018-9197**
- **STOLEN R H ET AL: "Optical fiber modes using stimulated four photons mixing" APPLIED OPTICS, OSA, OPTICAL SOCIETY OF AMERICA, WASHINGTON, DC, vol. 15, no. 1, 1 janvier 1976 (1976-01-01), pages 239-242, XP009123272 ISSN: 0003-6935**

**Description**

L'invention concerne un dispositif optique pour la génération d'une lumière polychromatique.

Un rayonnement monochromatique peut être transformé en lumière polychromatique, par le jeu des effets non linéaires qui se produisent dans une fibre optique. On préfère actuellement utiliser une fibre optique dite "microstructurée", qui est percée d'un grand nombre de trous microscopiques parcourant la fibre sur toute sa longueur. En section droite, ces trous forment un réseau géométrique autour de la zone centrale de la fibre.

Les effets non linéaires qui se produisent dans une fibre comprennent : le mélange à quatre ondes (« four-wave mixing » ou FWM en anglais); l'auto-modulation de phase (« self-phase modulation » ou SPM en anglais); la modulation de phase croisée (« cross-phase modulation » ou XPM en anglais); ou encore l'émission Raman stimulée (« stimulated Raman scattering » ou SRS en anglais), entre autres effets d'ordre 3.

Dans les fibres optiques classiques, non microstructurées, ces phénomènes ont connu de nombreuses applications comme la conversion de fréquence et l'amplification optique, par exemple.

De leur côté, les fibres microstructurées permettent de propager la lumière avec un confinement beaucoup plus fort et donc une efficacité de conversion non linéaire plus élevée que les fibres optiques classiques. Il en a résulté un vif intérêt des chercheurs pour les effets non linéaires dans les fibres microstructurées. Elles permettent de mieux contrôler l'apparition des effets non linéaires en adaptant la structure géométrique de la fibre. En effet, la courbe ou profil d'indice effectif peut être ajustée par une modification de la taille des trous et de la dimension de maille du réseau. Il en résulte un ajustement en conséquence de la dispersion de la fibre.

Lesvignes dévoile, dans la publication 1, la génération de lumière polychromatique dans une fibre multimodale microstructurée. L'accord de phase pour le mélange à quatre ondes est réalisé grâce à deux canaux placés de part et d'autre du coeur de la fibre afin de créer un profil d'indice anisotropique au niveau du coeur.

Kalosha divulgue, dans la publication 2, un mélange à quatre ondes dans une fibre en silice dont le coeur est dopé au germanium. Les différents modes de propagation dans la fibre ainsi que les conditions d'accord de phase y sont discutés.

Publication 1: LESVIGNE C: "Visible supercontinuum génération controlled by intermodal four- wave mixing in microstructured fiber", OPTICS LETTERS, OSA, OPTICAL SOCIETY OF AMERICA, WASHINGTON, DC, US, 1 août 2007 (2007- 08- 01) , pages 2173- 2175 Publication 2: KALOSHA V P ET AL: "Wideband frequency tuning by phase-matched stimulated four- photon mixing in low mode- number GeO2- SiO2 fibers", OPTICS COMMUNICATIONS, NORTH- HOLLAND PUBLISHING CO. AMSTERDAM, NL, vol. 57, no. 5, 1 avril 1986 (1986- 04- 01) , pages 314- 316

Cependant, dans les applications existantes, la bande spectrale utile est limitée, et on ne connaît pas de dispositif à la fois simple et paramétrable permettant d'obtenir la génération d'un mélange à quatre ondes unique, et efficace.

L'invention vient améliorer la situation.

A cet effet, l'invention propose un dispositif optique formant un générateur de lumière polychromatique, comprenant une source laser propre à délivrer un rayonnement de pompe à une première fréquence, et une fibre optique microstructurée.

Le coeur de cette fibre comporte au moins une première et une deuxième régions, qui présentent des compositions chimiques respectives différentes et agencées pour définir un accord de phase tel, qu'en cas d'excitation en régime non linéaire par le rayonnement de pompe, la fibre délivre en sortie une lumière polychromatique principalement constituée à partir du rayonnement de pompe, ainsi que de rayonnements tirés du rayonnement de pompe par effet non linéaire du type mélange à quatre ondes.

Ce dispositif est avantageux car, comme cela apparaîtra mieux dans la suite de la description, il offre des performances intéressantes en termes de rendement de conversion, avec une grande largeur de bande utile. Il s'y ajoute une grande souplesse pour adapter la fibre aux besoins de chaque application.

D'autres caractéristiques et avantages de l'invention apparaîtront mieux à la lecture de la description qui suit, tirée d'exemples donnés à titre illustratif et non limitatif, tirés des dessins sur lesquels :

- la figure 1 est une vue schématique d'un dispositif selon l'invention ;
- la figure 2 est une vue en trois dimensions de la fibre microstructurée de la figure 1 ;
- la figure 3 est une vue en coupe de la fibre microstructurée de la figure 2 selon un premier mode de réalisation ;
- la figure 4a est une vue agrandie de la figure 3,
- la figure 4b représente la distribution du dopage dans le coeur de la fibre visible sur la figure 4a ;
- la figure 5 représente un diagramme des indices effectifs de la fibre de la figure 3 pour deux modes propres électromagnétiques ;
- la figure 6a illustre les distributions radiales de puissance des deux modes propres de la figure 5 à 1064 nm ;
- les figures 6b et 6c illustrent les mêmes distributions de puissance dans un plan transverse, sous la forme de lignes de niveau ;

- la figure 7a illustre la distribution radiale de puissance d'un des modes propres de la figure 5 à 700 nm ;
- la figure 7b illustre cette distribution de puissance dans un plan transverse par des lignes de niveau ;
- la figure 8a illustre la distribution radiale de puissance d'un des modes propres de la figure 5 à 2250 nm ;
- la figure 8b illustre cette distribution de puissance dans un plan transverse par des lignes de niveau ;
- la figure 9 représente un spectre expérimental obtenu en sortie du dispositif de la figure 1 dans lequel la fibre de la figure 3 est utilisée ;
- la figure 10 et la figure 11 représentent des simulations d'accord de phase en faisant varier la composition chimique et la géométrie du coeur de la fibre de la figure 3 ;
- la figure 12 est une vue en coupe d'une fibre optique idéale selon le premier mode de réalisation ;
- la figure 13a est une vue agrandie de la figure 12 ;
- la figure 13b représente la distribution du dopage dans le coeur de la fibre visible sur la figure 13a ;
- la figure 14 et la figure 15 représentent des simulations d'accord de phase en faisant varier la composition chimique et la géométrie du coeur de la fibre de la figure 12;
- la figure 16 représente une vue en coupe d'une fibre microstructurée selon un second mode de réalisation ;
- la figure 17 représente un spectre expérimental obtenu en sortie du dispositif de la figure 1 dans lequel la fibre de la figure 16 est utilisée ; et
- la figure 18 est une vue schématique d'un dispositif pour générer un supercontinuum spectral selon l'invention.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

En outre, la description détaillée est augmentée de l'annexe A, qui donne la formulation de certaines formules mathématiques mises en oeuvre dans le cadre de l'invention. Cette Annexe est mise à part dans un but de clarification, et pour faciliter les renvois. Elle est partie intégrante de la description, et pourra donc non seulement servir à mieux faire comprendre la présente invention, mais aussi contribuer à sa définition, le cas échéant.

Le jeu des effets non linéaires dans les fibres est assez complexe. Il convient donc de rappeler certaines notions communes, en premier lieu.

Pulsation et longueur d'onde

Un rayonnement est classiquement caractérisé par sa longueur d'onde $\lambda$, c'est-à-dire la distance parcourue par l'onde, à la vitesse de la lumière c, pendant une période. On sait que la longueur d'onde est liée à la fréquence f par la formule $\lambda = c/f$. De son côté, la fréquence angulaire ou pulsation $\omega$ est liée à la fréquence f par la relation $\omega = 2\pi f$. Dans la suite, on pourra faire référence à $\lambda$, $\omega$ ou $f$ pour qualifier un même rayonnement.

Mélange à quatre ondes

Le mélange à quatre ondes est lié à une modification de l'indice de réfraction, elle-même associée à la réponse électronique du matériau sous l'effet d'un champ électromagnétique intense. Plus précisément, l'effet de mélange à quatre ondes correspond à un transfert d'énergie entre quatre ondes électromagnétiques de fréquences différentes. Deux conditions doivent en principe être satisfaites.

La première condition est la conservation de l'énergie : les fréquences des quatre ondes en interaction doivent vérifier une relation précise.

La seconde condition est ce qu'on appelle la "conservation du moment" : les vecteurs d'onde des quatre ondes en interaction doivent vérifier une relation précise, à savoir la relation d'accord de phase.

Il existe deux cas de figures principaux pour le mélange à quatre ondes.

Dans le premier cas, trois ondes de pulsations respectives $\omega_1$, $\omega_2$, et $\omega_3$ transfèrent leur énergie à une quatrième onde à la pulsation $\omega_4 = \omega_1 + \omega_2 + \omega_3$. Cela peut se faire par la génération de troisième harmonique lorsque $\omega_1 = \omega_2 = \omega_3$ ; cela peut se faire par conversion à la pulsation $\omega_4 = 2\omega_1 + \omega_3$ lorsque $\omega_1 = \omega_2 \neq \omega_3$. Mais, dans ce cas, il est difficile de satisfaire la condition d'accord de phase dans les fibres optiques, du moins avec une bonne efficacité.

Le second cas est celui où deux ondes de pulsations respectives $\omega 1$ et $\omega 2$ transfèrent simultanément leur énergie à deux autres ondes de pulsations respectives $\omega_3$ et $\omega_4$, telles que $\omega_3 + \omega_4 = \omega_1 + \omega_2$. Cette relation traduit la conservation de l'énergie lors du mélange à quatre ondes. La condition d'accord de phase pour ce type de mélange à quatre ondes est $\Delta\beta = 0$, avec $\Delta\beta$ donné par la relation [1] dans laquelle $c$ est la vitesse de la lumière dans le vide, $\beta_j = n_j \omega_j/c$ désigne la norme du vecteur d'onde, et $n_j$ est l'indice effectif de l'onde à la pulsation $\omega_j (j = 1, 2, 3, 4).$

On considère maintenant un mélange à quatre ondes partiellement dégénéré, c'est-à-dire que $\omega_1 = \omega_2$. La

relation d'accord de phase s'exprime alors selon la relation [2] de l'Annexe A.

Physiquement, une onde de pompe intense à la pulsation $\omega_1$ crée deux nouvelles ondes situées symétriquement de part et d'autre de la pulsation de pompe, aux pulsations $\omega_3$ et $\omega_4$, et dont l'écart de pulsation angulaire $\Omega$ s'écrit (avec $\omega_3 < \omega_4$) selon la relation [3] de l'Annexe A.

Par convention, l'onde générée de plus basse pulsation, ici $\omega_3$, est généralement appelée onde Stokes et l'onde de plus haute pulsation, ici $\omega_4$, est appelée onde anti-Stokes. On réécrit alors la relation d'accord de phase sous la forme de la relation [4] de l'Annexe A, dans laquelle les lettres en indice « S », « A », et « P » font référence à l'onde Stokes, à l'onde anti-Stokes et à l'onde de pompe, respectivement, tandis que les indices « P1 » et « P2 » désignent les deux modes propres associés à l'onde de pompe.

Les paramètres géométriques de la fibre microstructurée (taille des trous et taille de la maille) influent sur les valeurs des indices effectifs $n_j$ ($j$ =1, 2, 3, 4). En modifiant ces paramètres géométriques, il est possible d'ajuster la condition d'accord de phase de façon à obtenir l'écart de fréquence qui convient pour une application donnée.

Toutefois, la détermination des paramètres géométriques optimaux est une tâche longue et difficile, au niveau de la conception de la fibre. Et les techniques connues pour fabriquer une fibre microstructurée offrent une souplesse assez limitée quant au choix de ses paramètres géométriques.

Il en découle des difficultés pour contrôler le rôle du mélange à quatre ondes dans les fibres microstruturées.

<u>Modes propres</u>

Les fibres optiques microstructurées peuvent être des fibres multimodes, c'est-à-dire qu'elles peuvent être le siège de plusieurs modes propres électromagnétiques, lesquels possèdent des caractéristiques différentes de polarisation et de répartition transversale du champ électromagnétique dans la fibre.

Ainsi, lorsqu'un rayonnement est introduit dans une fibre multimode, il ne se propage pas selon une distribution de puissance répartie sur toute la surface de sa section transversale ; il aura tendance au contraire à se répartir selon des modes transverses différents, avec des maxima de puissance localisés dans différentes régions de la fibre.

Ainsi, dans une fibre optique multimode, on considère d'abord au moins deux modes électromagnétiques notés $HE_{11x}$ et $HE_{11y}$. Ils sont généralement assimilés à des modes linéairement polarisés (LP) notés $LP_{01x}$ et $LP_{01y}$ correspondant respectivement à 2 axes de polarisation orthogonaux que l'on peut définir dans la fibre optique.

Une chose est à noter : des modes $LP_{01}$ peuvent exister pour la longueur d'onde de pompe P, pour la longueur d'onde anti-Stokes A, et/ou pour la longueur d'onde Stokes S. Ces modes sont différents.

On peut en outre considérer quatre autres modes électromagnétiques notés $TE_{01}$, $HE_{21x}$, $HE_{21y}$, et $TM_{01}$. Ils sont généralement assimilés à des modes linéairement polarisés $LP_{11x}$ et $LP_{11y}$ correspondant aux 2 axes de polarisation de la fibre optique, avec la condition supplémentaire que le champ s'annule selon une des deux directions perpendiculaires dans le plan transverse de la fibre optique.

Les principes physiques ainsi définis permettront de mieux comprendre la description ci-après des dispositifs selon l'invention.

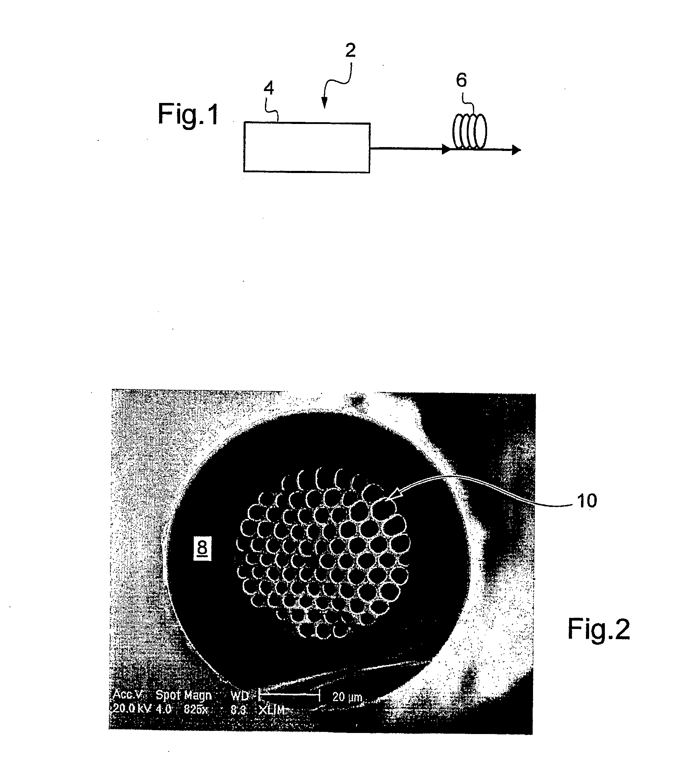

La figure 1 illustre un premier exemple d'un dispositif optique pour la génération d'une lumière polychromatique 2. Il comprend une source de rayonnement 4, qui pompe un rayonnement lumineux à une première longueur d'onde $\lambda_1$ dans une fibre optique 6.

Dans l'exemple décrit ici, la source de rayonnement 4 est un laser à puce Nd:YAG d'une puissance moyenne d'environ 100 mW émettant des impulsions à 1064 nm, pour une durée d'impulsion de l'ordre de 1 ns. Un rayonnement polychromatique est obtenu en sortie de la fibre optique 6, comme on le verra.

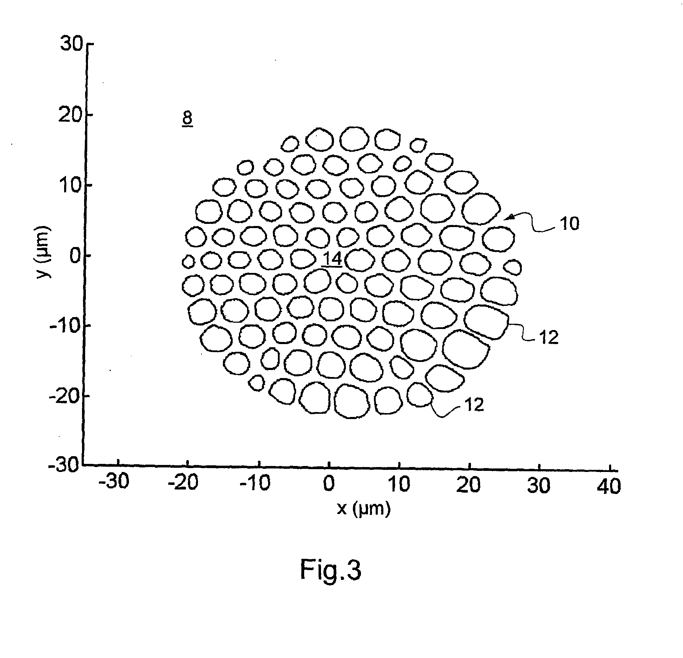

La figure 2 est une vue en trois dimensions du profil de la fibre optique 6. Cette vue a été obtenue à partir d'un microscope à balayage électronique. La figure 3 représente une vue en coupe transversale de la même fibre.

L'invention part d'une fibre microstructurée dont le coeur possède deux régions différentes, ayant des indices de réfraction distincts.

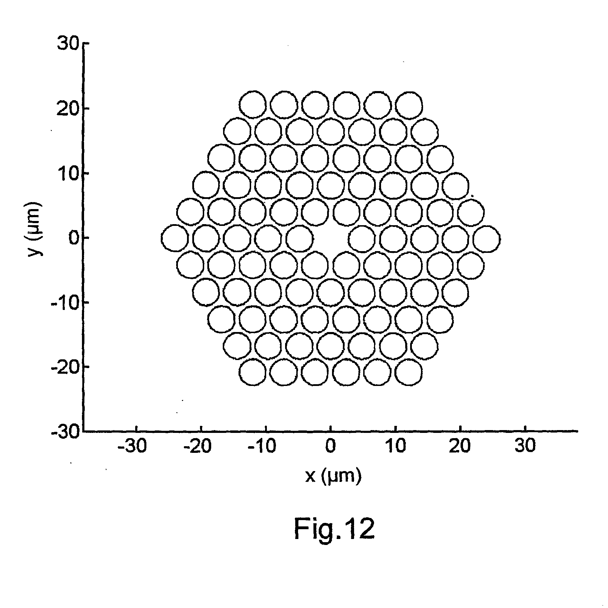

Les figures 3 à 11 montrent un premier mode de réalisation de la fibre optique microstructurée 6. Ensuite, les figures 12 à 15 montreront une variante de ce premier mode de réalisation de la fibre optique 6.

Comme on peut le voir en coupe transversale sur la figure 3, la fibre optique 6 comprend un coeur 14, entouré par une zone microstructurée 10 qui fait partie d'une gaine 8.

La zone 10 comprend de nombreux canaux d'air 12 sensiblement circulaires (cylindriques à base circulaire) et s'étendant le long de la fibre optique 6.

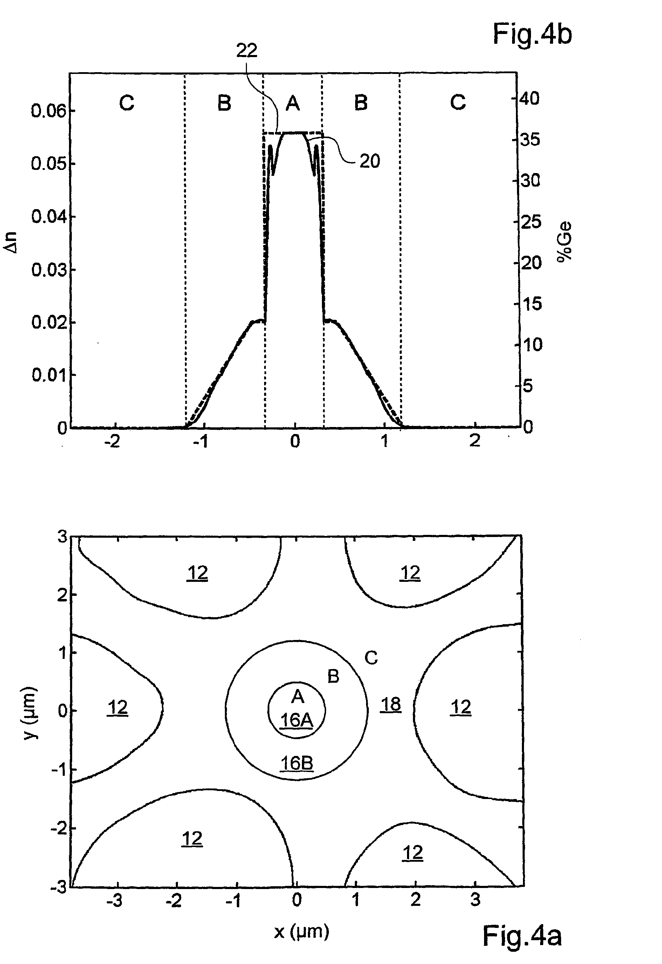

Au centre de la zone 10, la fibre optique 6 comprend un coeur 14. Le coeur 14 comporte une première région 16 et une deuxième région 18. La première région 16 (16A et 16B sur la figure 4a) est la plus centrale. Elle possède une section droite sensiblement circulaire. La deuxième région 18 se situe autour de la première région, avec une forme annulaire, dont le rayon intérieur est sensiblement le rayon de la région 16, et dont le rayon extérieur est sensiblement celui du coeur 14.

En ajustant les compositions chimiques, différentes, respectives de ces régions, on peut obtenir un mélange à quatre ondes particulièrement performant.

Dans l'exemple de réalisation des figures 3 à 11, les canaux 12 ont un diamètre moyen de 4,5 $\mu$m environ. L'espacement entre les centres des canaux est en moyenne de 5,5 $\mu$m environ.

Le diamètre moyen de canaux 12 pourrait également être choisi dans la plage de 3 à 10 $\mu$m, de préférence 4 à 8 $\mu$m, et de manière encore préférée de 4 à 6 $\mu$m.

Le coeur 14 est très fortement dopé au germanium. Il a une taille comparable à celle des canaux 12, c'est-à-dire qu'il est sensiblement circulaire, avec ici un diamètre de 4,5 $\mu$m environ.

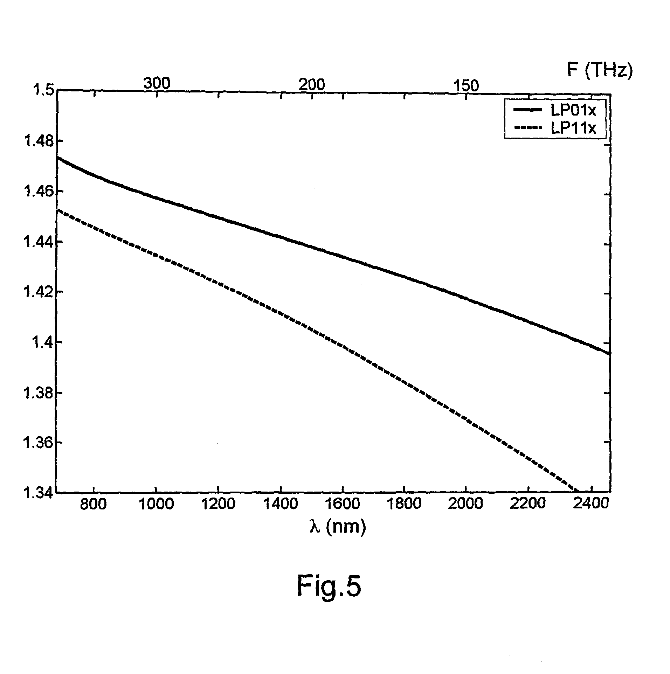

La figure 4b représente le profil de dopage en section droite du coeur 14, en correspondance de la figure 4a. Sur la figure 4b, le tracé 20 en trait plein représente le taux de dopage en germanium en fonction de la distance au point central du coeur 14. Le tracé 22 en trait tireté correspond à une approximation par segments de droite du tracé 20. Ce tracé 22 sert de base aux figures 5 à 10. Il permet en effet d'améliorer les temps de calcul pour générer ces figures 5 à 10, tout en constituant une approximation fidèle du profil réel 20.

Sur les figures 4a et 4b, on distingue dans le coeur 14 trois zones concentriques A, B et C, de l'intérieur vers l'extérieur. Dans la première zone A, le pourcentage molaire de germanium est de l'ordre de 36%. Ceci induit une différence d'indice de l'ordre de 0,055 par rapport à celui de la silice pure à 1064 nm. La deuxième zone B commence ici par un court plateau correspondant à un pourcentage molaire de germanium de 12,5% environ, qui induit une différence d'indice de réfraction de l'ordre de 0,02 par rapport à la silice pure à 1064 nm ; ensuite, le pourcentage molaire de germanium diminue quasi linéairement vers zéro. Enfin, cette zone B est suivie d'une troisième zone C, où le pourcentage molaire de germanium est négligeable, avec une différence d'indice correspondante quasi-nulle.

Le contour de la zone A est un cercle sensiblement centré sur le centre du coeur 14. Son diamètre est ici d'environ 0,75 nm. La zone B est sensiblement annulaire et s'étend entre la périphérie de la zone A et sa propre périphérie sensiblement circulaire, d'un diamètre d'environ 2,25 nm. La zone C, également sensiblement annulaire, comprend le reste du coeur 14.

La région 16 est constituée par la première zone A. La deuxième région 18 est constituée par la zone C. On peut considérer que la zone B fait également partie de la région 16 (16B, Figure 4a) ou bien la considérer comme une zone de transition entre les régions 16 et 18. En réalité, cette zone B devrait être rendue aussi étroite que possible, ou même ne pas exister du tout. Sa présence est due au fait qu'il n'est pas possible actuellement de réaliser une variation de dopage parfaitement abrupte, du moins à des conditions économiquement acceptables.

Par "écart d'indice de réfraction" d'une zone, on entend la différence entre l'indice de réfraction de cette zone et l'indice de réfraction sans dopage de la silice (plus généralement du matériau de base du coeur).

Dans la première région 16, l'écart d'indice de réfraction $\Delta n$, ici de 0,055, est très élevé. Dans la deuxième région 18, la concentration en germanium baisse fortement et induit un écart d'indice $\Delta n$ compris entre 0 et 0,02 environ.

Le fait d'introduire le coeur 14 avec cette structure particulière à deux régions aux caractéristiques chimiques très différentes produit des effets très intéressants que la Demanderesse a réussi à maîtriser.

Sur la figure 4, le coeur 14 présente en coupe transversale les deux régions 16A (zone A) et 18 (zone C), avec une frontière annulaire 16B (la zone B) entre les deux régions 16A et 18. La frontière 16B a ici une épaisseur de l'ordre de 0,5 $\mu$m. Elle présente une teneur de dopage au germanium comprise entre 0 et 12,5%, ce qui correspond à un $\Delta n$ compris entre 0,00 et 0,02.

Les figures 5 à 8 montrent des résultats de simulations, basées sur l'approximation du profil transversal conformément au tracé 22 de la figure 4b.

La figure 5 représente l'évolution en fonction de la longueur d'onde des indices effectifs de la fibre 6 pour le mode LP$_{01}$ (trait plein) et le mode LP$_{11}$ (trait tireté). L'écart entre les indices effectifs de ces modes s'agrandit au fur et à mesure que la longueur d'onde augmente. Au niveau de la longueur d'onde de pompe (1064 nm ici), cet écart est de l'ordre de 0,02. A titre comparatif, dans une fibre microstructurée classique non dopée, l'écart entre indices effectifs est environ deux fois moindre à 1064 nm.

Il est rappelé que les modes LP$_{01}$ et LP$_{11}$ sont différents à chaque longueur d'onde.

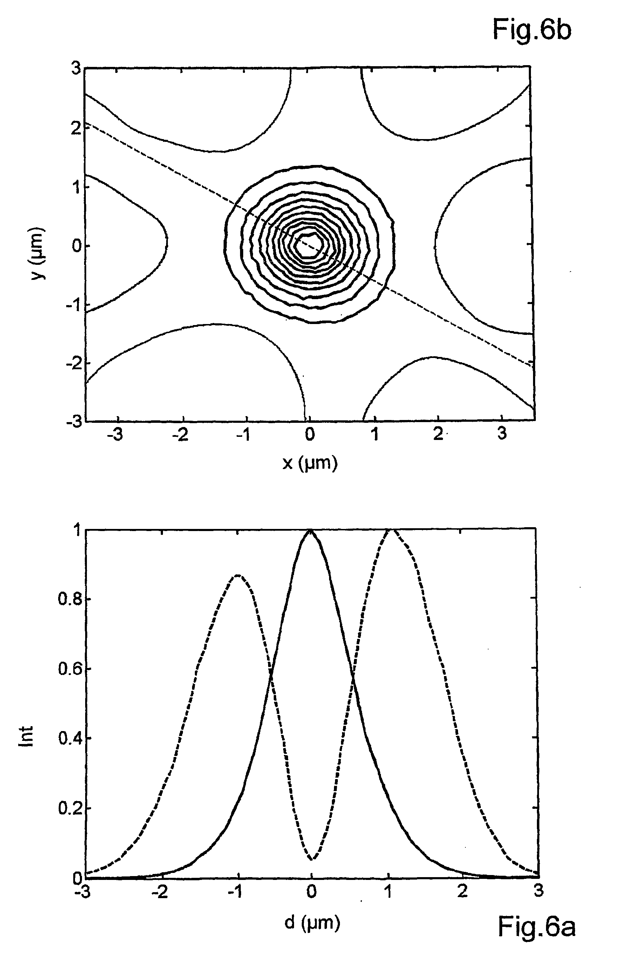

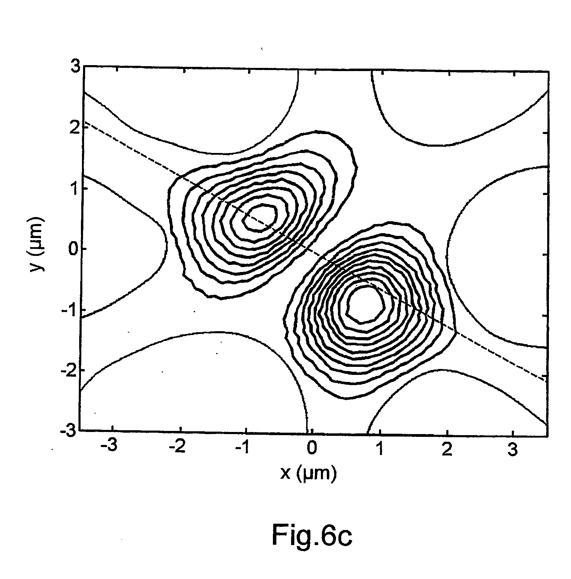

Les figures 6 à 8 représentent, pour des longueurs d'onde choisies, des diagrammes de répartition de puissance dans la fibre 6 ainsi que des vues correspondantes sous forme de lignes de niveau selon la vue de la figure 4a.

Les figures 6a, 6b et 6c représentent la répartition de puissance dans la fibre 6 en section droite. Elles correspondent à une excitation de la fibre optique 6 à 1064 nm.

Sur la figure 6a, on a représenté la distribution transverse de l'intensité normalisée de lumière, d'une part pour le mode LP$_{01}$ (en traits plein) et d'autre part pour le mode LP$_{11}$ (en trait tireté). Le diagramme de la figure 6a comporte en abscisse la distance du point considéré par rapport au centre du coeur 14, et en ordonnée la valeur de l'intensité normalisée au même point. Par intensité normalisée, on entend le rapport entre l'intensité de la lumière transmise au point considéré et l'intensité maximale de lumière transmise à cette longueur d'onde.

La figure 6b illustre elle aussi la distribution transverse de l'intensité normalisée de lumière pour le mode LP$_{01}$. Mais la représentation se fait par courbes de niveau dans la section droite, par paliers de 0,1 sur l'intensité normalisée. La figure 6c est définie de la même manière que la figure 6b, mais pour le mode LP$_{11}$ (trait tireté de la figure 6a). Les figures 6b et 6c comportent aussi des droites en trait tireté, qui indiquent les plans dans lesquels sont prises les deux courbes de la figure 6a.

La figure 6a fait apparaître que les modes $LP_{01}$ et $LP_{11}$ ont une zone de recouvrement importante, ce qui permet un mélange à quatre ondes efficace. En effet, c'est à 1064 nm, c'est-à-dire la longueur d'onde du rayonnement de pompe, que va avoir lieu l'interaction principale sur laquelle se fonde le dispositif proposé.

Sur la figure 6b, le mode $LP_{01}$ présente un maximum d'intensité au centre du coeur 14. La distribution est sensiblement centrée, globalement. La majeure partie du rayonnement du mode $LP_{01}$ se situe dans une zone qui correspond sensiblement à la première région 16A, et à la frontière 16B.

Sur la figure 6c, le mode $LP_{11}$ présente deux lobes sensiblement alignés sur la ligne en pointillés de la figure 6b, de part et d'autre du centre du coeur 14. Ici, chaque lobe présente une crête dont la distance au centre du coeur 14 est d'environ 1 $\mu$m. Ainsi, la majeure partie du rayonnement en mode $LP_{11}$ se situe dans une zone qui correspond sensiblement à la deuxième région 18, et à la frontière 16B.

En bref, les diagrammes des figures 6a, 6b et 6c montrent que le mode $LP_{01}$ est principalement présent au centre de la fibre, tandis que le mode $LP_{11}$ est principalement présent dans deux lobes écartés. Ces diagrammes mettent également en avant le recouvrement des deux modes propres à 1064 nm, ce qui est à l'origine du mélange à quatre ondes efficace, ici proposé.

Il a été observé que la relation [4] peut être réécrite de manière à expliciter la contribution liée au dopage. Le dopage se manifeste par une modification sélective des indices effectifs intervenant dans la relation [4]. Les indices effectifs des ondes « A » et « P1 », qui se propagent dans la zone dopée, sont augmentés d'une quantité $\delta$. De leur côté, les indices effectifs des modes « S » et « P2 », qui ne présentent pas de recouvrement avec la zone dopée, restent inchangés. La relation [4] d'accord de phase se réécrit alors sous la forme de la relation [5] de l'Annexe A.

En effectuant un développement en série de Taylor des $\beta_j$ autour de $\omega_P$, il vient les formules [6] et [7] de l'Annexe A.

En substituant dans la relation d'accord de phase, on obtient l'expression de l'écart de fréquence selon la formule [8] de l'Annexe A.

La formule [8] indique que l'écart de fréquence peut être ajusté en augmentant ou en faisant décroître la grandeur $\delta$ qui est directement liée aux caractéristiques de la région dopée (taux de dopage et rayon de la zone dopée).

La Demanderesse a observé que l'on peut ainsi obtenir des valeurs de la grandeur d'écart $\Omega$ dont l'équivalent en fréquence est supérieur à 100 THz, au lieu des quelques dizaines de THz habituels.

Dans l'exemple visé, la résolution de cette équation à partir du diagramme d'indice de réfraction de la figure 4b (tracé 22) donne $\lambda_S$ = 2250 nm et $\lambda_A$ = 700 nm.

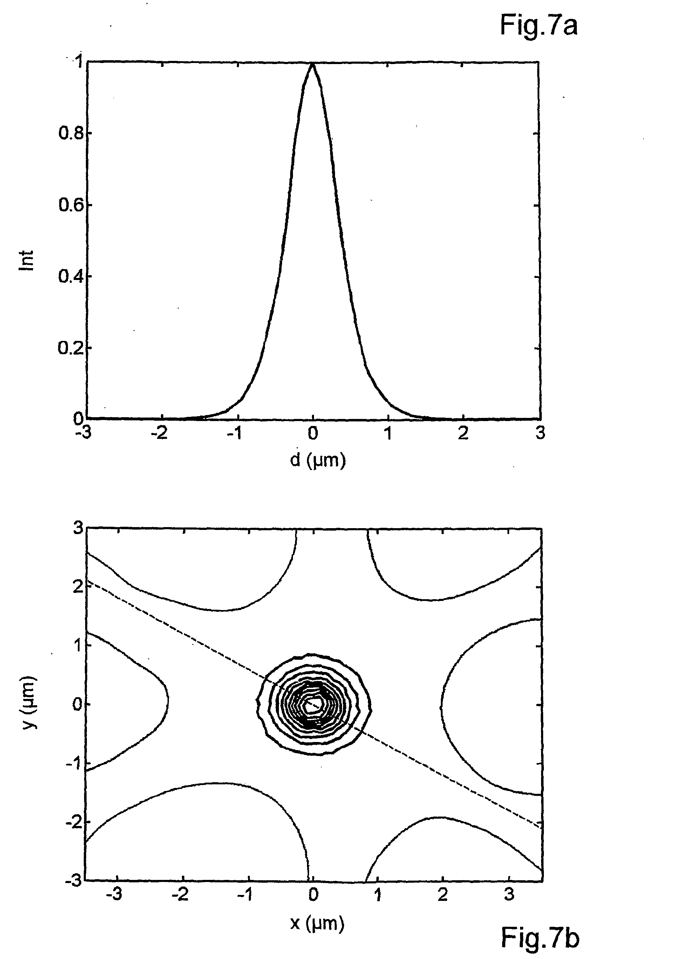

On considérera maintenant une excitation de la fibre optique à 700 nm (longueur d'onde anti-Stokes). Cela correspond aux figures 7a et 7b, qui sont construites comme les Figures 6a et 6b, mais ne concernent que le mode $LP_{01}$. En effet, pour la fibre optique 6 considérée, le rayonnement émis par le dispositif 2 procédera de ce mode $LP_{01}$ à la longueur d'onde de 700 nm. Par ailleurs, la ligne en trait tireté de la figure 7b indique la direction selon laquelle la figure 7a a été établie. Comme précédemment, chaque ligne de niveau représentée sur la figure 7b correspond à un palier d'intensité normalisée de 0,1.

Ici, le maximum d'intensité lumineuse se trouve au centre du coeur 14. Ainsi, le mode $LP_{01}$ est actif principalement au centre de la fibre, à la longueur d'onde de 700 nm. Le rayonnement est présent presque exclusivement dans une zone qui correspond sensiblement à la première région 16, ce qui apparaît bien sur la figure 7a.

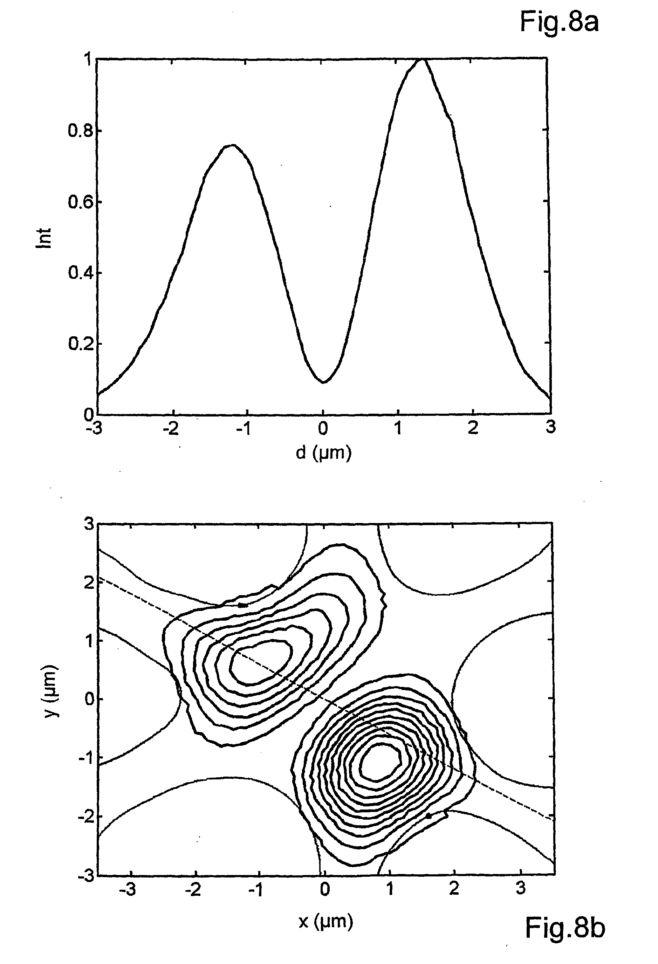

On considère maintenant une excitation de la fibre optique à 2250 nm (longueur d'onde Stokes). Cela correspond aux figures 8a et 8b, qui sont elles aussi construites comme les Figures 6a et 6b. Ici, seul le mode $LP_{11}$ est représenté, car c'est celui qui détermine le rayonnement qui sera émis à cette longueur d'onde par le dispositif 2. La ligne en trait tireté de la figure 8b indique la direction selon laquelle la figure 8a a été établie. Encore une fois, chaque ligne de niveau de la figure 8b correspond à un palier d'intensité normalisée de 0,1.

Ici, le profil transverse d'intensité retrouve l'allure en deux lobes de la figure 6c. Le maximum d'intensité se trouve au centre de chaque lobe, et à environ 1 $\mu$m du centre du coeur 14. Ainsi, l'intensité du mode $LP_{11}$ se répartit principalement selon deux lobes et s'annule au centre de la fibre à la longueur d'onde de 2250 nm. Les deux zones où se trouve l'essentiel du rayonnement sont pratiquement incluses dans la deuxième région 18, ce qui apparaît encore plus clairement sur la figure 8b.

Au vu des figures 6 à 8, et de leur description, il apparaît que :

- le profil de la fibre à 1064 nm permet un mélange à quatre ondes efficace entre les modes $LP_{01}$ et $LP_{11}$ ; et
- ce mélange, combiné au profil d'indice de réfraction de la fibre, permet de générer des ondes Stokes et anti-Stokes très éloignées de la longueur d'onde de pompe ; et
- ce mélange, combiné au profil d'indice de réfraction de la fibre, permet également de choisir le mode transverse aux longueurs d'onde Stokes et anti-Stokes.

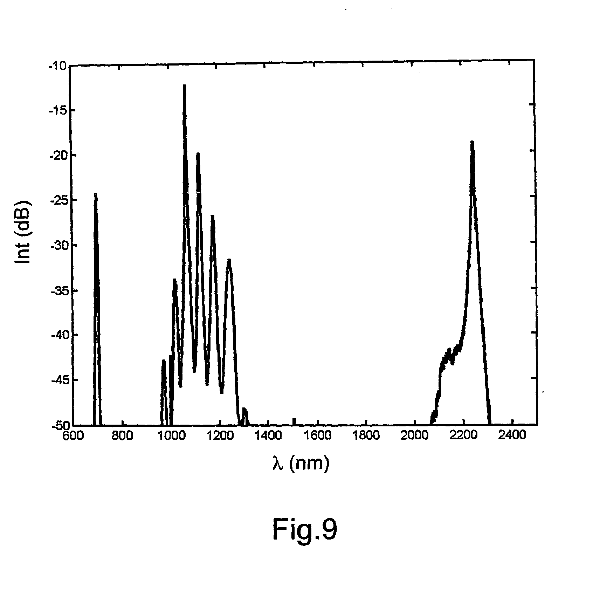

La figure 9 représente un spectre expérimental réel obtenu en sortie du dispositif de la figure 1, utilisant la fibre de la figure 3. Cette figure confirme que le dispositif produit le mélange à quatre ondes prévu, avec un rendement excellent. La différence entre l'intensité lumineuse à la longueur d'onde de pompe et l'intensité lumineuse à la longueur d'onde Stokes est seulement de 7 dB. Cette différence est de 12 dB pour la longueur d'onde anti-Stokes.

Ce spectre fait apparaître que, au niveau de à la longueur d'onde anti-Stokes (700 nm), le rayonnement est très concentré sur cette longueur d'onde, c'est-à-dire que l'on observe une raie centrée à 700 nm, et dont la base est étroite (environ 20 nm).

Au niveau de la longueur d'onde de pompe (1064 nm), on observe une raie principale à 1064 nm, et quatre raies vers les longueurs d'onde supérieures, respectivement à 1130 nm, 1180 nm, 1250 nm et 1300 nm. On observe également deux raies vers les longueurs d'onde inférieures, à 970 nm et 1020 nm respectivement.

Les raies de part et d'autre de la longueur d'onde de pompe nm sont assez étroites (entre 30 nm et 50 nm à leur base), et correspondent à une émission Raman stimulée. Seule la raie à 1130 nm et celle à 1180 nm ont une intensité significative, avec une différence d'intensité lumineuse de respectivement 8 dB et 15 dB environ par rapport à l'intensité à 1064 nm.

Enfin, au niveau de la longueur d'onde Stokes (2250 nm) , on observe un pic à cette longueur d'onde, très abrupt vers les longueurs d'onde supérieures (le niveau- 50 dB est atteint à 2300 nm) et étalé vers les longueurs d'onde inférieures, avec un niveau d'intensité autour de- 43 dB.

En dehors des différentes raies décrites plus haut, le niveau d'intensité relevé est inférieur à -50 dB, ce qui est considéré comme négligeable.

Il ressort donc de ce spectre que l'essentiel de l'énergie du rayonnement de pompe est transformé par le mélange à quatre ondes en rayonnements à 700 nm, 1064 nm et 2250 nm.

Le fait qu'il n'existe presque aucune autre raie que celles aux longueurs d'onde de la pompe, Stokes et anti-Stokes montre que le mélange à quatre ondes est presque le seul effet non linéaire qui s'exprime.

La Demanderesse a donc ainsi produit une lumière polychromatique principalement constituée à partir du rayonnement de pompe, ainsi que des rayonnements tirés du rayonnement de pompe par effet non linéaire du type mélange à quatre ondes.

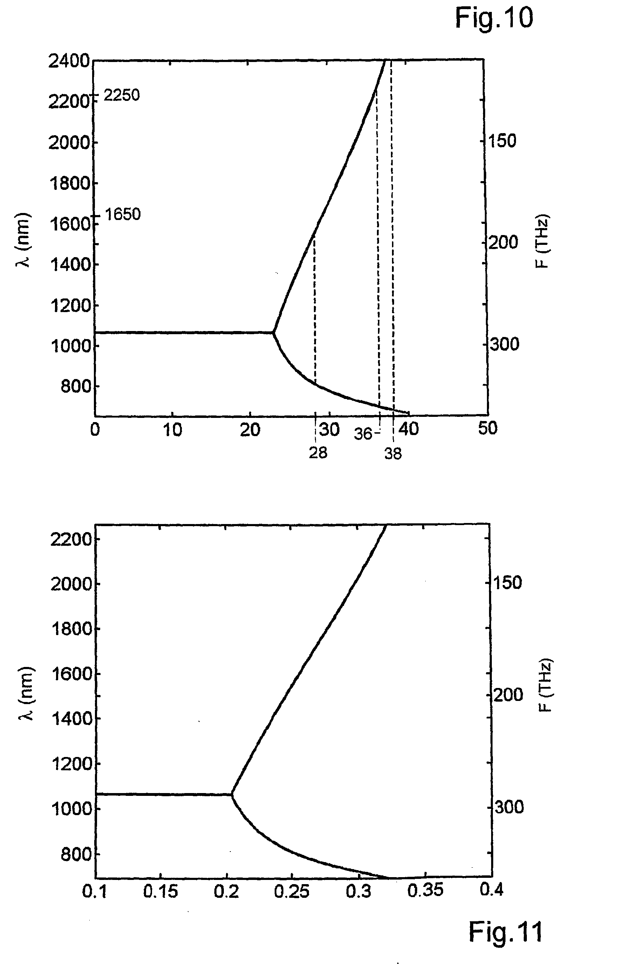

D'autres travaux ont été menés par la Demanderesse à partir du profil de la fibre selon le tracé 22 de la figure 4b. Les figures 10 et 11 représentent les résultats de ces travaux.

Sur la figure 10, on a fixé les dimensions générales de la fibre optique à partir de celles décrites plus haut en référence à la figure 3. Le rayon de la première région 16 a été fixé à 0,375 $\mu$m. Le diagramme de la figure 10 représente les accords de phase réalisables, avec en abscisses la fraction molaire de germanium dans la première région 16. En ordonnées, on trouve à gauche les longueurs d'onde (en nm) et à droite les fréquences (en THz) où l'accord de phase est réalisable.

Le diagramme indique qu'en dessous d'une fraction molaire d'environ 23%, l'accord de phase n'est pas possible dans la configuration modale envisagée ici. C'est à quoi correspond la droite horizontale ($\lambda$ = 1064 nm), en partie gauche du diagramme.

Au- delà de 23%, l'accord de phase devient possible. Pour obtenir les fréquences des ondes Stokes et anti-Stokes, il convient de tracer une droite verticale à la fraction molaire voulue. Les points d'intersection de cette droite avec la ou les courbes donnent la fréquence et la longueur d'onde du ou des accords de phase.

A mesure que la fraction molaire augmente, les longueurs d'ondes Stokes et anti-Stokes s'éloignent progressivement de la longueur d'onde de pompe, c'est-à-dire que l'écart de fréquence (ou "différence fréquentielle") du mélange à quatre ondes augmente.

Si l'on s'attache au cas particulier d'une fraction molaire de 36%, représenté par un trait vertical sur la figure 10, on retrouve l'accord de phase avec la longueur d'onde Stokes à 2250 nm et la longueur d'onde anti-Stokes à 700 nm, ce qui correspond à une différence fréquentielle de 146 THz.

L'effet commence à 23% environ. On observe par exemple que, dès 28%, il y a un accord de phase avec la longueur d'onde Stokes à 1650 nm et la longueur d'onde anti-Stokes à 800 nm, ce qui correspond à une différence fréquentielle de 97 THz.

Ensuite, les différences fréquentielles augmentent très rapidement, et la différence fréquentielle la plus importante représentée s'établit avec une fraction molaire de 38%, pour laquelle on observe un accord de phase avec la longueur d'onde Stokes à 2400 nm et la longueur d'onde anti- Stokes à 680 nm, ce qui correspond à une différence fréquentielle de 157 THz.

Les fractions molaires représentées avec cette figure permettent donc d'obtenir une différence fréquentielle dans la plage [97 THz ; 157 THz].

Dans le cas de la figure 11, on a fixé les dimensions générales de la fibre optique à partir de celles décrites plus haut avec la figure 3. Cette fois, c'est la fraction molaire de germanium dans la première région 16 qui est fixée à 36%, tandis que les abscisses représentent le rayon de la première région 16. Le diagramme de cette figure 11 représente les accords de phase réalisables à dopage constant, en fonction du rayon.

Comme précédemment, en dessous d'un rayon pour la première région 16 d'environ 0,2 $\mu$m, l'accord de phase n'est pas possible dans la configuration modale envisagée ici (droite horizontale en partie gauche du diagramme). Au-delà, les fréquences des ondes Stokes et anti-Stokes s'obtiennent comme précédemment, mais en traçant une droite verticale à partir du rayon voulu.

Ainsi, au-delà de 0, 2 $\mu$m, les longueurs d'onde Stokes et anti-Stokes s'éloignent progressivement de la longueur d'onde de pompe, c'est-à-dire que l'écart de fréquence du mélange à quatre ondes augmente, à mesure que le rayon augmente.

La Demanderesse a également étudié le cas d'une fibre optique idéale, dont les caractéristiques physiques seraient d'une géométrie parfaite, assez difficile à reproduire dans la réalité. Cela sera maintenant décrit, en référence aux figures 12, 13, 14 et 15, qui sont semblables aux figures 3, 4, 10 et 11, respectivement.

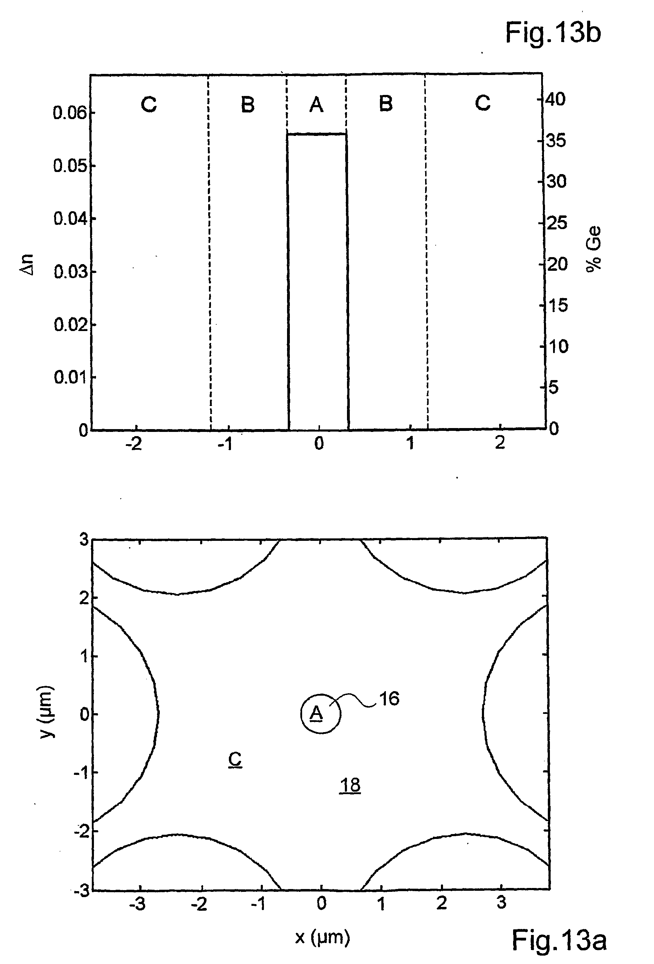

Sur les figures 12, 13a et 13b, les canaux 12 sont parfaitement circulaires et de diamètre constant. En outre, comme visible sur la figure 13b, le dopage est supposé parfait, ce qui élimine la zone B de la figure 4.

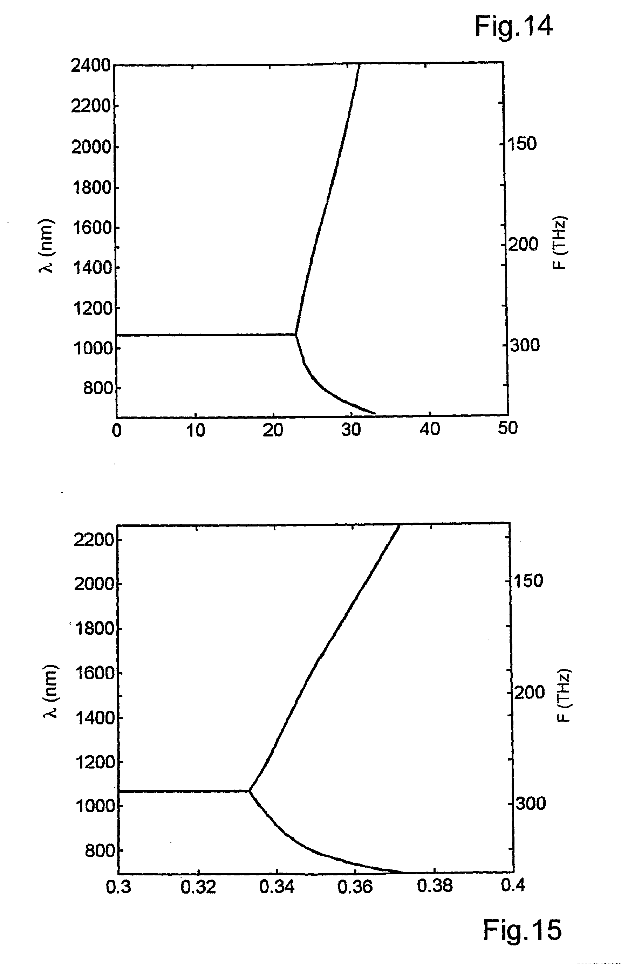

Les figures 14 et 15 sont des diagrammes d'accord de phase semblables à ceux des figures 10 et 11, mais pour le profil idéal de la figure 13b. La comparaison fait apparaître qu'une réalisation géométriquement plus précise de la fibre 6 permet de réduire la quantité de germanium nécessaire dans son coeur. En effet :

- à rayon égal, l'écart de fréquence du mélange augmente plus vite avec le taux de dopage sur la figure 14 que sur la figure 10 ;
- à taux de dopage égal, l'écart de fréquence du mélange augmente plus vite avec le rayon sur la figure 15 que sur la figure 11.

Comme indiqué, dans le mode de réalisation des figures 12, 13, 14 et 15, la différence d'indice de réfraction dans le coeur serait obtenue par dopage franc de la région centrale du coeur de la fibre. La région périphérique est sensiblement composée de silice pure.

On considérera maintenant des variantes de réalisation.

Ce dopage peut être réalisé avec du germanium, mais également avec d'autres dopants tels que le phosphore, le fluor, le bore, le bismuth, le chrome, une ou des terres rares, ou encore un mélange de deux de ces dopants, ou plus.

En outre, la différence d'indice pourrait être obtenue par dopage différent des deux régions. Ces deux régions auraient alors des compositions distinctes, obtenues à partir de dopants différents ou de mélanges différents de dopants.

Enfin, on peut faire en sorte que les dopages des première et deuxième régions se traduisent par un écart d'indice négatif. On obtiendrait alors un rayonnement à la longueur d'onde Stokes sur le mode $LP_{01}$ et un rayonnement à la longueur d'onde anti-Stokes sur le mode $LP_{11}$.

Dans ce qui précède, la différence d'indice est obtenue en jouant sur le dopage d'un même matériau de base. En variante, ou en complément, on peut utiliser des matériaux de base différents.

Ainsi, selon un autre mode de réalisation, des effets similaires à ceux décrits précédemment peuvent être obtenus en utilisant pour les deux régions deux matériaux vitreux distincts respectifs choisis dans le groupe qui comprend : la silice, les chalcogénures, les verres fluorés, l'oxyde d'antimoine, les silicates, borates ou encore borosilicates de plomb, de bismuth, de lanthane, d'aluminium, de lanthane-aluminium. Dans ce cas, le reste de la fibre optique peut également se composer d'un ou plusieurs matériaux choisis dans le même groupe.

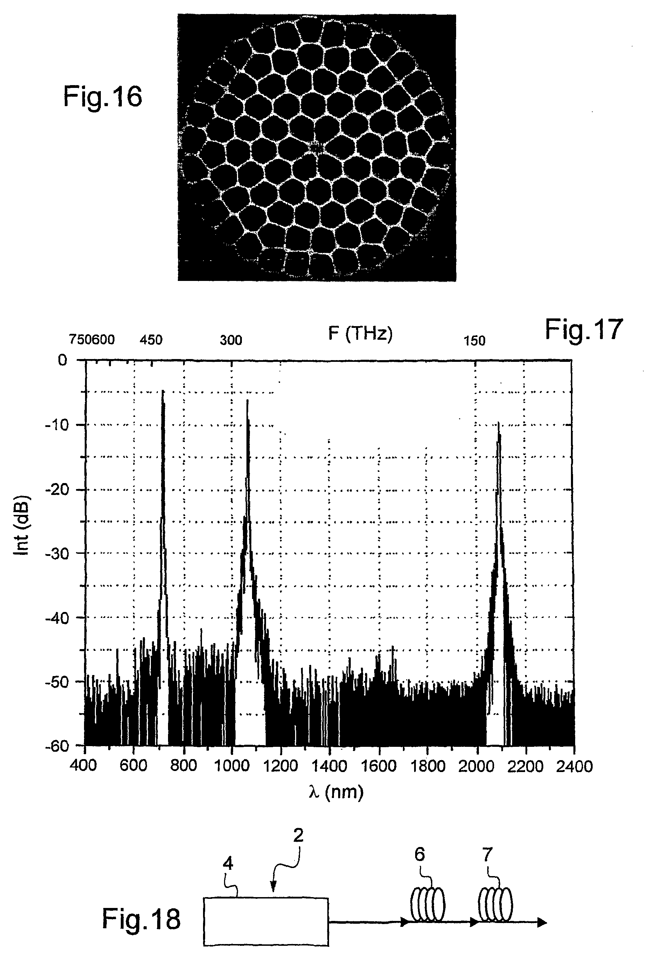

Il est maintenant fait référence à la figure 16, qui est une vue semblable à la figure 2, mais pour un autre mode de réalisation de la fibre optique 6. Comme la figure 2, cette figure 16 a été obtenue au moyen d'un microscope électronique à balayage.

Ici, la différence d'indice n'est plus réalisée par dopage différentiel du coeur de la fibre optique. On réalise les deux régions du coeur 14 dans deux matériaux différents.

Ainsi, la région centrale du coeur 14 est réalisée en silicate de lanthane-aluminium, composé à 70 mol % d'oxyde $SiO_2$, à 20 mol % d'oxyde $Al_2O_3$ et à 10 mol % d'oxyde $La_2O_3$, tandis que la seconde région, ainsi que le reste de la fibre, sont réalisés en silice pure.

Dans ce mode de réalisation, l'invention repose sur un principe semblable à celui du premier mode de réalisation.

Ici, le mélange à quatre ondes ne repose plus sur l'excitation de deux modes propres électromagnétiques par la pompe, mais sur le fait que différents modes propres à 720 nm, 1064 nm et 2090 nm se recouvrent au centre de la fibre. Il est rappelé que des modes $LP_{01}$ (par exemple) peuvent exister pour la longueur d'onde de pompe P, pour la longueur d'onde anti-Stokes A, et/ou pour la longueur d'onde Stokes S. Ces modes sont différents et vont donc se recouvrir différemment avec la région centrale du coeur 14.

Le mélange à quatre ondes est réalisé par l'interaction de deux photons issus du mode propre $LP_{01}$ à 1064 nm avec respectivement le mode $LP_{01}$ à 720 nm et ce même mode à 2090 nm.

Dans l'exemple, la fibre de la figure 16 a un diamètre global d'environ 160 $\mu$m, une zone microstructurée de diamètre environ 85 $\mu$m, un coeur de diamètre environ 4,5 $\mu$m, et des canaux d'air de diamètre moyen 8 $\mu$m dont les centres sont séparés par une distance de 8,4 $\mu$m.

La figure 17 représente un spectre expérimental réel obtenu en sortie du dispositif 1 avec la fibre de la figure 16.

Il apparaît clairement sur cette figure que le dispositif produit le mélange à quatre ondes décrit plus haut, avec un rendement excellent : les niveaux de transmission à la longueur d'onde de pompe, à la longueur d'onde Stokes, et à la longueur d'onde anti-Stokes sont les mêmes à 5 dB près, environ.

On a vu que le générateur de lumière polychromatique délivre en sortie une lumière polychromatique principalement constituée à partir du rayonnement de pompe, ainsi que de rayonnements tirés du rayonnement de pompe par effet non linéaire du type mélange à quatre ondes.

Cela étant, il reste possible, selon l'invention de chercher à élargir le spectre des raies obtenues, par exemple sur la figure 9. On peut aussi faire suivre le générateur de lumière polychromatique proposé d'une autre fibre optique, dans un montage propre à obtenir ou approcher un supercontinuum spectral.

La figure 18 est une vue schématique d'un dispositif mettant en oeuvre ce principe.

Cette figure est identique au schéma de principe de la figure 1, à cela près qu'une fibre optique 7 a été reliée à la sortie de la fibre optique 6.

Dans le cas décrit ici, la fibre optique 7 est une fibre microstructurée composée de silice pure, pour laquelle le diamètre moyen des canaux d'air est choisi dans la plage de 2 à 6 $\mu$m et l'espacement entre les centres des canaux dans la plage de 2 à 6 $\mu$m préférentiellement.

La fibre optique 7 est alors particulièrement adaptée à l'élargissement de la raie anti-Stokes obtenue en sortie de la fibre optique 6, à environ 700 nm.

Plus généralement, les caractéristiques géométriques de la fibre optique 7 peuvent être choisies de telle sorte que la dispersion du mode fondamental s'annule à une longueur d'onde distante au maximum de 100 nm de la longueur d'onde du rayonnement anti-Stokes délivré par le générateur de lumière polychromatique 2.

Dans ce cas, la production d'un supercontinuum spectral s'étalant de l'ultraviolet au proche infrarouge peut être obtenue.

En outre, les caractéristiques géométriques de la fibre optique 7 peuvent également être choisies de telle sorte que la dispersion du mode fondamental s'annule à une longueur d'onde distante au maximum de 300 nm de la longueur d'onde du rayonnement Stokes délivré par le générateur de lumière polychromatique 2.

Dans ce cas, la production d'un supercontinuum spectral infrarouge peut être obtenue.

Enfin, ces deux cas peuvent être réalisés simultanément en choisissant les caractéristiques de la fibre optique 7 de manière à ce que celle-ci possède deux longueurs d'onde d'annulation de la dispersion pour le mode fondamental, l'une située à proximité de la longueur d'onde anti-Stokes, l'autre située à proximité de la longueur d'onde Stokes.

Cela permettra d'obtenir un supercontinuum spectral s'étalant de l'ultraviolet au proche infrarouge, et dans l'infrarouge.

La description qui précède comprend des modes de réalisation expérimentaux, et des modes de réalisation simulés, susceptibles de réalisation physique. L'ensemble de ces modes de réalisation contribue donc à la définition des paramètres et des limites applicables à la présente invention.

Même si la combinaison de caractéristiques issues de différents modes de réalisation a pu être mentionnée explicitement, cela n'est pas limitatif. D'autres combinaisons sont envisageables conformément aux enseignements et explications donnés. Par exemple, l'invention n'est pas limitée aux combinaisons de modes d'ordres 0 et 1 (LP$_{01}$ et LP$_{11}$), ni à une longueur d'onde de pompe à 1064 nm.

L'objet de l'invention est d'une haute technicité, que l'homme du métier maîtrise. L'invention offre notamment un moyen de concevoir et d'adapter, notamment par simulation, une fibre à la génération de lumière polychromatique ayant un spectre particulier désiré. Tout ce que l'homme du métier pourra en déduire entre dans le cadre de la présente invention. Ainsi, la conception de la fibre du générateur de lumière peut être vue comme suit :

a. prévoir une fibre optique microstructurée, dont le coeur comporte au moins une première et une deuxième régions, et

b. ajuster les différentes compositions chimiques respectives desdites première et deuxième régions pour définir un accord de phase tel, qu'en cas d'excitation en régime non linéaire par le rayonnement de pompe, la fibre délivre en sortie une lumière polychromatique principalement constituée à partir du rayonnement de pompe, ainsi que de rayonnements tirés du rayonnement de pompe par effet non linéaire du type mélange à quatre ondes.

Plus précisément, l'opération b. peut être mise en oeuvre pour choisir l'écart de fréquence entre le rayonnement de pompe et les différents rayonnements qui en sont tirés.

D'un autre point de vue, on peut considérer que les deux régions du coeur sont établies pour constituer une structure fortement résonante pour un mélange à quatre ondes fondé sur un ou des modes optiques (linéairement polarisés) de la fibre.

ANNEXE A

[1]

$$\Delta\beta = \beta_3 + \beta_4 - \beta_1 - \beta_2 = (n_3\omega_3 + n_4\omega_4 - n_1\omega_1 - n_2\omega_2)/c$$

[2]

$$\Delta\beta = [n_3\omega_3 + n_4\omega_4 - (n_1 + n_2)\omega_1]/c = 0.$$

[3]

$$\Omega = \omega_1 - \omega_3 = \omega_4 - \omega_1$$

[4]

$$\Delta\beta = [n_S\omega_S + n_A\omega_A - (n_{P1} + n_{P2})\omega_P]/c = 0$$

[5]

$$\Delta\beta = [n_S\omega_S + (n_A + \delta)\omega_A - (n_{P1} + \delta + n_{P2})\omega_P]/c$$
$$= \beta_S + \beta_A - \beta_{P1} - \beta_{P2} + \delta\Omega/c$$
$$= 0$$

avec

$$\beta_j = n_j\omega_j/c \ (j = S, A, P1, P2), \text{ et } \Omega = \omega_A - \omega_P = \omega_P - \omega_S.$$

[6]

$$\beta_S = \beta_{P2} - \beta'_{P2}\,\Omega + \beta''_{P2}\,\Omega^2/2 + o(\Omega^3)$$

où

$$\beta'_j = \frac{\partial\beta_j}{\partial\omega} \text{ et } \beta''_j = \frac{\partial\beta'_j}{\partial\omega}$$

[7]

$$\beta_A = \beta_{P1} + \beta'_{P1}\,\Omega + \beta''_{P1}\,\Omega^2/2 + o(\Omega^3),$$

où

$$\beta'_j = \frac{\partial \beta_j}{\partial \omega} \text{ et } \beta''_j = \frac{\partial \beta'_j}{\partial \omega}$$

[8]

$$\Omega = 2\frac{\beta'_{P_2} - \beta'_{P_1} - \delta/c}{\beta''_{P_1} + \beta''_{P_2}}$$

**Revendications**

1. Dispositif optique formant générateur de lumière polychromatique, comprenant une source laser (4) propre à délivrer un rayonnement de pompe à une première fréquence, et une fibre optique microstructurée (6) dans laquelle ledit rayonnement de pompe est introduit et dont le coeur comporte au moins une première région (16) et une deuxième région (18), **caractérisé en ce que** lesdites première et deuxième régions (16, 18) présentent des compositions chimiques respectives différentes et agencées pour définir un accord de phase tel, qu'en cas d'excitation en régime non linéaire par le rayonnement de pompe, la fibre optique microstructurée (6) délivre en sortie une lumière polychromatique principalement constituée à partir du rayonnement de pompe, ainsi que de rayonnements tirés du rayonnement de pompe par effet non linéaire du type mélange à quatre ondes.

2. Dispositif selon la revendication 1, **caractérisé en ce que** les rayonnements tirés du rayonnement de pompe ont des fréquences respectives situées de part et d'autre de ladite première fréquence, et décalées d'au moins 100 THz par rapport à celle-ci.

3. Dispositif selon la revendication 1 ou 2, dans lequel la première région (16) présente une géométrie correspondant sensiblement à un premier mode propre électromagnétique de la fibre optique microstructurée (6) à ladite première fréquence, et la deuxième région (18) présente une géométrie englobant sensiblement un second mode propre électromagnétique de la fibre optique microstructurée (6) à ladite première fréquence, lesdites premier et second modes propres électromagnétiques présentant une zone de recouvrement; et dans lequel le rayonnement de pompe à ladite première fréquence introduit dans la fibre optique microstructurée (6) se propage selon le premier et le deuxième mode propre électromagnétique pour produire ladite lumière polychromatique.

4. Dispositif selon la revendication 3, **caractérisé en ce que** les compositions chimiques desdites première et deuxième régions (16, 18) diffèrent par le dopage.

5. Dispositif selon la revendication 4, **caractérisé en ce que** le coeur comprend une matrice de silice dopée sélectivement au germanium.

6. Dispositif selon la revendication 1 à 4, **caractérisé en ce que** les compositions chimiques desdites première et deuxième régions (16, 18) diffèrent par leurs matériaux vitreux de base respectifs.

7. Dispositif selon la revendication 6, **caractérisé en ce que** les matériaux de base respectifs desdites première et deuxième régions (16, 18) sont choisis dans le groupe qui comprend la silice, les chalcogénures, les verres fluorés, l'oxyde d'antimoine, les silicates, borates ou encore borosilicates de plomb, de bismuth, de lanthane, d'aluminium, de lanthane-aluminium.

8. Dispositif selon l'une des revendications précédentes, **caractérisé en ce que** le coeur présente un diamètre de 3 à 10 $\mu$m, de préférence un diamètre de 4 à 6 $\mu$m.

9. Dispositif selon l'une des revendications précédentes, **caractérisé en ce que**, dans la section transversale de la fibre optique microstructurée (6), la première région (16) est de forme sensiblement circulaire, et la deuxième région (18) est de forme sensiblement annulaire, les centres respectifs desdites première et deuxième régions (16, 18) coïncidant sensiblement avec le centre géométrique du coeur de la fibre optique microstructurée (6).

10. Dispositif selon la revendication 9, **caractérisé en ce que** le diamètre de la première région (16) est sensiblement égal au diamètre intérieur de l'anneau que forme la seconde région (18).

11. Dispositif selon l'une des revendications précédentes, **caractérisé en ce qu'**il comporte une deuxième fibre optique microstructurée (7), reliée à la sortie de ladite fibre optique microstructurée (6).

12. Dispositif selon la revendication 11, **caractérisé en ce que** ladite deuxième fibre optique microstructurée (7) présente un profil de dispersion qui comporte une annulation à une longueur d'onde distante au maximum de 100 nm de la longueur d'onde de l'un desdits rayonnement tirés du rayonnement de pompe par effet non linéaire du type mélange à quatre ondes, cette longueur d'onde étant inférieure à la longueur d'onde du rayonnement de pompe.

13. Dispositif selon la revendication 11 ou 12, **caractérisé en ce que** ladite deuxième fibre optique microstructurée (7) présente un profil de dispersion qui comporte une annulation à une longueur d'onde distante au maximum de 300 nm de la longueur d'onde de l'un desdits rayonnement tirés du rayonnement de pompe par effet non linéaire du type mélange à quatre ondes, cette longueur d'onde étant supérieure à la longueur d'onde du rayonnement de pompe.

## Patentansprüche

1. Optische Vorrichtung, die einen Generator für polychromatisches Licht bildet, mit einer Laserquelle (4), die eine Pumpstrahlung mit einer ersten Frequenz abgeben kann, und einer mikrostrukturierten Lichtleitfaser (6), in die die Pumpstrahlung eingeführt wird und deren Kern mindestens einen ersten Bereich (16) und einen zweiten Bereich (18) umfasst, **dadurch gekennzeichnet, dass** der erste und der zweite Bereich (16, 18) jeweilige unterschiedliche chemische Zusammensetzungen aufweisen und beschaffen sind, um eine Phasenabstimmung zu definieren, so dass im Fall einer Anregung im nicht-linearen Bereich durch die Pumpstrahlung die mikrostrukturierte Lichtleitfaser (6) am Ausgang polychromatisches Licht abgibt, das hauptsächlich aus der Pumpstrahlung sowie Strahlungen, die von der Pumpstrahlung durch einen nicht-linearen Effekt vom Typ Vierwellenmischung abgezogen sind, besteht.

2. Vorrichtung nach Anspruch 1, **dadurch gekennzeichnet, dass** die von der Pumpstrahlung abgezogenen Strahlungen jeweilige Frequenzen aufweisen, die auf beiden Seiten der ersten Frequenz liegen und um mindestens 100 THz in Bezug auf diese versetzt sind.

3. Vorrichtung nach Anspruch 1 oder 2, wobei der erste Bereich (16) eine Geometrie aufweist, die im Wesentlichen einen ersten elektromagnetischen Eigenmodus der mikrostrukturierten Lichtleitfaser (6) mit der ersten Frequenz entspricht, und der zweite Bereich (18) eine Geometrie aufweist, die im Wesentlichen einen zweiten elektromagnetischen Eigenmodus der mikrostrukturierten Lichtleitfaser (6) mit der ersten Frequenz umfasst, wobei die erste und die zweite elektromagnetischen Eigenmodi eine Überlappungszone aufweisen; und wobei die Pumpstrahlung mit der ersten Frequenz, die in die mikrostrukturierte Lichtleitfaser (6) eingeführt wird, sich gemäß der ersten und der zweiten elektromagnetischen Eigenmodi ausbreitet, um das polychromatische Licht zu erzeugen.

4. Vorrichtung nach Anspruch 3, **dadurch gekennzeichnet, dass** sich die chemischen Zusammensetzungen des ersten und des zweiten Bereichs (16, 18) in der Dotierung unterscheiden.

5. Vorrichtung nach Anspruch 4, **dadurch gekennzeichnet, dass** der Kern eine selektiv mit Germanium dotierte Siliziumdioxidmatrix umfasst.

6. Vorrichtung nach Anspruch 1 bis 4, **dadurch gekennzeichnet, dass** die chemischen Zusammensetzungen des ersten und des zweiten Bereichs (16, 18) sich in ihren jeweiligen Basisglasmaterialien unterscheiden.

7. Vorrichtung nach Anspruch 6, **dadurch gekennzeichnet, dass** die jeweiligen Basismaterialien des ersten und des zweiten Bereichs (16, 18) aus der Gruppe ausgewählt sind, die Siliziumdioxid, Chalkogenide, Fluorgläser, Antimonoxid, Blei-, Wismut-, Lanthan-, Aluminium-, Lanthan-Aluminium-Silikate, -Borate oder auch -Borsilikate umfasst.

8. Vorrichtung nach einem der vorangehenden Ansprüche, **dadurch gekennzeichnet, dass** der Kern einen Durchmesser von 3 bis 10 μm, vorzugsweise einen Durchmesser von 4 bis 6 μm aufweist.

9. Vorrichtung nach einem der vorangehenden Ansprüche, **dadurch gekennzeichnet, dass** im Querschnitt der mikrostrukturierten Lichtleitfaser (6) der erste Bereich (16) eine im Wesentlichen kreisförmige Form aufweist und der zweite Bereich (18) eine im Wesentlichen ringförmige Form aufweist, wobei die jeweiligen Zentren des ersten und des zweiten Bereichs (16, 18) im Wesentlichen mit dem geometrischen Zentrum des Kerns der mikrostrukturierten Lichtleitfaser (6) übereinstimmen.

10. Vorrichtung nach Anspruch 9, **dadurch gekennzeichnet, dass** der Durchmesser des ersten Bereichs (16) im Wesentlichen gleich dem Innendurchmesser des Rings, den der zweite Bereich (18) bildet, ist.

11. Vorrichtung nach einem der vorangehenden Ansprüche, **dadurch gekennzeichnet, dass** sie eine zweite mikrostrukturierte Lichtleitfaser (7) umfasst, die mit dem Ausgang der mikrostrukturierten Lichtleitfaser (6) verbunden ist.

12. Vorrichtung nach Anspruch 11, **dadurch gekennzeichnet, dass** die zweite mikrostrukturierte Lichtleitfaser (7) ein Streuprofil aufweist, das eine Auslöschung bei einer Wellenlänge umfasst, die höchstens um 100 nm von der Wellenlänge von einer der Strahlungen entfernt ist, die von der Pumpstrahlung durch einen nicht-linearen Effekt des Typs Vierwellenmischung abgezogen sind, wobei diese Wellenlänge geringer ist als die Wellenlänge der Pumpstrahlung.

13. Vorrichtung nach Anspruch 11 oder 12, **dadurch gekennzeichnet, dass** die zweite mikrostrukturierte Lichtleitfaser (7) ein Streuprofil aufweist, das eine Auslöschung bei einer Wellenlänge umfasst, die höchstens um 300 nm von der Wellenlänge von einer der Strahlungen entfernt ist, die von der Pumpstrahlung durch einen nicht-linearen Effekt des Typs Vierwellenmischung abgezogen sind, wobei diese Wellenlänge größer ist als die Wellenlänge der Pumpstrahlung.

**Claims**

1. Optical device forming a polychromatic light generator, comprising a laser source (4) capable of delivering pump radiation at a first frequency, and a microstructured optical fibre (6) in which said pump radiation is introduced and the core of which comprises at least a first region (16) and a second region (18), **characterised in that** said first and second regions (16, 18) have respective differing chemical compositions arranged so as to define a phase matching such that, in the event of excitation in non-linear operation by the pump radiation, the microstructured optical fibre (6) outputs a polychromatic light chiefly formed from the pump radiation, as well as radiation derived from the pump radiation by a non-linear effect of the four-wave mixing type.

2. Device according to claim 1, **characterised in that** the radiation drawn from the pump radiation has respective frequencies located on either side of said first frequency and offset by at least 100 THz relative thereto.

3. Device according to claim 1 or 2, wherein the first region (16) has a geometry substantially corresponding to a first electromagnetic intrinsic mode of the microstructured optical fibre (6) at said first frequency, and the second region (18) has a geometry substantially encompassing a second electromagnetic intrinsic mode of the microstructured optical fibre (6) at said first frequency, said regions having an overlap zone, and wherein the pump radiation at said first frequency introduced into the microstructured optical fibre (6) propagates according to the first and second electromagnetic intrinsic modes so as to produce said polychromatic light.

4. Device according to claim 3, **characterised in that** the chemical compositions of said first and second regions (16, 18) differ as a result of doping.

**5.** Device according to claim 4, **characterised in that** the core comprises a silica matrix selectively doped with germanium.

**6.** Device according to claims 1 to 4, **characterised in that** the chemical compositions of said first and second regions (16, 18) differ in their respective vitreous base materials.

**7.** Device according to claim 6, **characterised in that** the respective base materials of said first and second regions (16, 18) are selected from among silica, the chalcogenides, the fluorinated glasses, antimony oxide, the silicates, borates or borosilicates of lead, bismuth, lanthanum, aluminium or lanthanum-aluminium.

**8.** Device according to one of the preceding claims, **characterised in that** the core has a diameter of 3 to 10 $\mu$m, preferably a diameter of 4 to 6 $\mu$m.

**9.** Device according to one of the preceding claims, **characterised in that**, in the cross-section of the microstructured optical fibre (6), the first region (16) is substantially circular in shape and the second region (18) is substantially annular in shape, the respective centres of said first and second regions (16, 18) substantially coinciding with the geometric centre of the core of the microstructured optical fibre.

**10.** Device according to claim 9, **characterised in that** the diameter of the first region (16) is substantially equal to the internal diameter of the ring formed by the second region (18).

**11.** Device according to one of the preceding claims, **characterised in that** it comprises a second microstructured optical fibre (7) connected to the output of said microstructured optical fibre (6).

**12.** Device according to claim 11, **characterised in that** said second microstructured optical fibre (7) has a dispersion profile which comprises a cancellation at a wavelength which is at a distance of at most 100 nm from the wavelength of one of said radiations derived from the pump radiation by a non-linear effect of the four-wave mixing type, this wavelength being less than the wavelength of the pump radiation.

**13.** Device according to claim 11 or 12, **characterised in that** said second microstructured optical fibre (7) has a dispersion profile which comprises a cancellation at a wavelength which is at most 300 nm away from the wavelength of one of said radiations derived from the pump radiation by a non-linear effect of the four-wave mixing type, this wavelength being greater than the wavelength of the pump radiation.

Fig.1

Fig.2

Fig.3

Fig.4b

Fig.4a

Fig.5

Fig.6b

Fig.6a

Fig.6c

Fig.7a

Fig.7b

Fig.8a

Fig.8b

Fig.9

Fig.10

Fig.11

Fig.12

Fig.13b

Fig.13a

Fig.14

Fig.15

Fig.16

Fig.17

Fig.18

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Visible supercontinuum génération controlled by intermodal four-wave mixing in microstructured fiber. **LESVIGNE C.** OPTICS LETTERS, OSA. OPTICAL SOCIETY OF AMERICA, 01 Août 2007, 2173-2175

- **KALOSHA V P et al.** Wideband frequency tuning by phase-matched stimulated four-photon mixing in low mode-number GeO2-SiO2 fibers. *OPTICS COMMUNICATIONS, NORTH-HOLLAND PUBLISHING CO. AMSTERDAM, NL,* 01 Avril 1986, vol. 57 (5), 314-316